# EUROPÄISCHE PATENTSCHRIFT

(11) **EP 2 548 718 B1**
(45) Veröffentlichungstag und Bekanntmachung des Hinweises auf die Patenterteilung: **23.09.2015**
(21) Anmeldenummer: 12173386.9
(22) Anmeldetag: 25.06.2012
(51) Int. Cl.: B29C 67/00

(54) **Verwendung einer Vorrichtung und Verfahren zum schichtweisen Laser-Sintern von dreidimensionalen Objekten**
Use of an apparatus and method for layerwise laser sintering of three dimensional objects
Utilisation d'un dispositif et procédé pour la fabrication en couches par le frittage laser des produits tridimensionelles

(30) Priorität: 21.07.2011 DE 102011079518
(43) Veröffentlichungstag der Anmeldung: 23.01.2013
(73) Patentinhaber: Evonik Degussa GmbH, 45128 Essen (DE)
(72) Erfinder: Grebe, Maik, 44805 Bochum (DE); Monsheimer, Sylvia, 45721 Haltern am See (DE); Diekmann, Wolfgang, 45731 Waltrop (DE); Kreutz, Juergen, 45772 Marl (DE)

(56) Entgegenhaltungen:
- EP-A1- 2 246 145
- WO-A1-00/02293
- STEPHEN P. TSENG AND HWA-HSING TANG: "A Uniform Laser Energy Density Controller for the Rapid Prototype Processing", JOURNAL OF THE CHINESE INSTITUTE OF ENGINEERS, Bd. 33, Nr. 3, 1. Januar 2010 (2010-01-01) , Seiten 405-414, XP002686104,
- SAVALANI ET AL.: "Evaluation of CO2 and Nd:YAG Lasers for the Selective laser Sintering of HAPEX (RTM)", IMECHE 2006, Bd. 220, Nr. B, 27. September 2005 (2005-09-27), Seiten 171-181, XP002686105, London, UK
- Dr. Alexander laskin: "Beam Shaping Optics for Additive Laser technologies", , 16. Februar 2011 (2011-02-16), XP002685987, Gefunden im Internet: URL:http://www.lia.org/blog/2011/02/beam-s haping-optics-for-additive-laser-technolog ies/ [gefunden am 2012-10-23]
- FISCHER ET AL.: "Pulsed Laser Sintering of Metallic Powders", THIN SOLID FILMS, 2004, pages 139-144,

## Beschreibung

Die vorliegende Erfindung betrifft die Verwendung einer Vorrichtung zur schichtweisen Herstellung von dreidimensionalen Objekten sowie ein Verfahren zur schichtweisen Herstellung.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings/Rapid Manufacturing geeignet ist, ist das selektive Laser-Sintern (SLS). Das Verfahren des Laser-Sinterns (Rapid Prototyping) zur Darstellung von Formkörpern aus pulverförmigen Polymeren wird ausführlich in der Patentschriften US 6136948 und WO 96/06881 (beide DTM Corporation) beschrieben. Eine Vielzahl von Polymeren und Copolymeren wird für diese Anwendung beansprucht, wie z.B. Polyacetat, Polyester, Polyvinylchlorid, Polypropylen, Polyethylen, lonomere und Polyamid.

In EP 2246145 A1 wo die Merkmale des Oberbegriffs der Oberbegriffe der Ansprüche 1, 4 und 9 offenbart werden, werden Vorrichtungen zur schichtweisen Herstellung von dreidimensionalen Objekten beschrieben. Diese umfasst einen Laser und eine Steuereinheit. Die durchschnittliche Leistung des Lasers wird periodisch von 250 W auf 500 W erhöht, so dass der Tastgrad von 50 % auf 100 % erhöht wird.

Ein Problem bei den oben beschriebenen Verfahren ist, dass das polymere Material durch Leistungsspitzen des Lasers geschädigt wird. Die durch die Leistungsspitzen verursachten erhöhten Temperaturen können zu einem Molekulargewichtsabbau des Polymers führen. Durch eine thermische Schädigung kann es zu Verfärbungen der Bauteile kommen. Zudem werden bei der Verarbeitung mitunter Bestandteile der polymeren Werkstoffe durch die besagten Temperaturspitzen freigesetzt. Die freigesetzten Stoffe stören den Prozess, da diese sich an wichtigen Bauteilen wie Linsen oder Pyrometer (Strahlungsthermometer) absetzen und deren Funktion beeinträchtigen.

Die Entwicklung im Bereich SLS geht in Richtung immer höherer Belichtungsgeschwindigkeiten, welche eine immer höhere Leistung des Lasers erfordern, um die notwendige Laserenergie in das Pulvermaterial einzutragen. Eine einfache Reduzierung der Leistung des Lasers zur Vermeidung des Molekulargewichtsabbaus ist daher nicht zielführend. Der Prozess würde durch diese Maßnahme deutlich verlangsamt, was nicht erwünscht ist. Es besteht ein Bedarf für eine Lösung, bei der eine möglichst hohe Laserenergie in das Pulvermaterial eingetragen werden kann, ohne einen Molekulargewichtsabbau zu bewirken.

Aufgabe der vorliegenden Erfindung ist somit die Verbesserung des Laser-Sinter-Prozesses.

Überraschend wird gefunden, dass mit einem hohen Tastgrad der Pulsweitenmodulation (PWM) der Leistungssteuerung des Lasers dieses Problem gelöst werden kann.

Ein erster Gegenstand der vorliegenden Erfindung ist somit die Verwendung einer Vorrichtung zur schichtweisen Herstellung von dreidimensionalen Objekten, mindestens umfassend einen Laser, wobei die Vorrichtung zusätzlich eine Steuereinheit umfasst, die den Laser auf einen Tastgrad von mehr als 60% einstellt bei einer Taktfrequenz von mindestens 5 kHz, gemäß Anspruch 1. Wesentlicher Kern der Vorrichtung ist die Anwesenheit einer Steuereinheit, die den Laser auf einen Tastgrad von mehr als 60 %, vorzugsweise mehr als 80 % und insbesondere auf mehr als 90 % einstellt. Mit einem hohen Tastgrad kann der durch den Laser verursachte Molekulargewichtsabbau des Polymers vermieden bzw. deutlich vermindert werden, ohne den Energieeintrag des Lasers und somit die Geschwindigkeit des Belichtungprozesses zu reduzieren. Insbesondere hat die erfindungsgemäße Vorrichtung den Vorteil, dass lediglich durch Steuerung des Lasers der erfindungsgemäße Vorteil erzielt werden kann, ohne dass größere Umbauten an bestehenden Anlagen erfolgen müssen.

Die Steuereinheit dient der Steuerung des Lasers, wobei die Steuerung des Lasers vorzugsweise über eine Pulsweitenmodulation erfolgt. Die Pulsweitenmodulation (PWM) ist eine Modulationsart, bei der eine technische Größe zwischen zwei Werten (ein/aus) wechselt. Bei konstanter Frequenz wird die Breite des Impulses/Einschaltzeit moduliert. Mit der PWM ist ein verlustarmer Schaltbetrieb möglich.

Der Tastgrad (auch Aussteuergrad, engl.: duty factor) gibt für eine periodische Folge von Impulsen gemäß DIN IEC 60469-1 das Verhältnis der Impulsdauer zur Impulsperiodendauer an. Der Tastgrad ist also das Verhältnis der Einschaltzeit gegenüber der Periodendauer. Der Tastgrad wird als dimensionslose Verhältniszahl mit einem Wert von 0 bis 1 oder als 0 bis 100 % angegeben. Je länger die Einschaltzeit gegenüber der Periodendauer ist, umso höher sind auch Tastgrad und mittlere Leistung.

Bei der bevorzugten Ausführungsform der Vorrichtung wird der Laser mittels Pulsweitenmodulation geregelt, wobei die Taktfrequenz mindestens 5 kHz, vorzugsweise mindestens 10 kHz und ganz besonders bevorzugt mindestens 20 kHz beträgt.

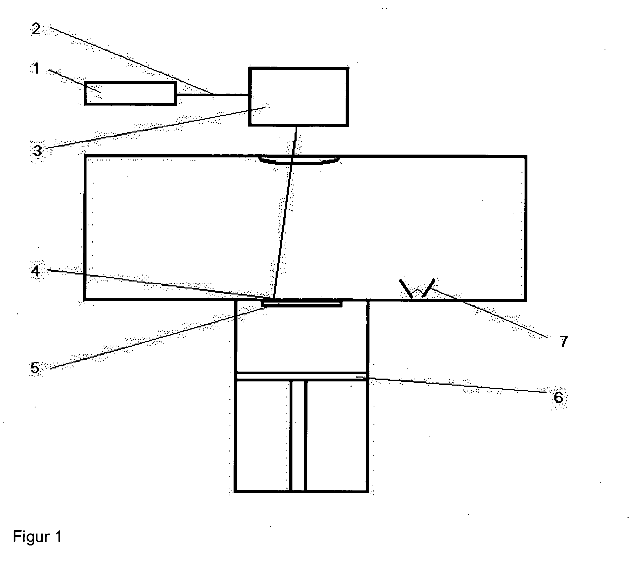

Eine Ausführungsform der Vorrichtung ist aus Fig. 1 ersichtlich. So weist die Vorrichtung zum schichtweisen Herstellen eines Objektes einen Baubehälter auf. In diesem Behälter ist ein Träger (6) mit einer im Wesentlichen ebenen und zu der Oberkante des Baubehälters im Wesentlichen parallel ausgerichteten Oberseite angeordnet. Der Träger (6) ist zum Tragen eines zu bildenden Objektes (5) ausgebildet. Der Träger (6) ist durch eine (nicht dargestellte) Höhenverstelleinrichtung in vertikaler Richtung bewegbar. Die Ebene, in der Pulvermaterial aufgetragen und verfestigt wird, bildet eine Arbeitsebene (4).

Die Vorrichtung weist eine Strahlungsquelle auf, z.B. in Form eines Lasers 1, der einen Laserstrahl 2 erzeugt. Oberhalb des Baubehälters ist eine Scaneinheit (3) angeordnet.

Die in der Vorrichtung enthaltene Steuereinheit (nicht dargestellt) regelt nun den Leistungsausstoß des Lasers, insbesondere mit Hilfe der PWM.

Der Baubehälter kann temperiert sein und/oder mit Inertgas, beispielsweise mit Argon, inertisiert werden.

Ein weiterer Gegenstand der vorliegenden Erfindung sind Verfahren zur schichtweisen Herstellung von dreidimensionalen Objekten aus Polymerpulvern, wobei das selektive Aufschmelzen bzw. Sintern das Polymerpulvers durch einen Laser mit einem Tastgrad von mehr als 60 % erfolgt mit einer Taktfrequenz von mindesten 5 kHz.

Im Rahmen der vorliegenden Erfindung beträgt der Tastgrad mehr als 60 %, insbesondere mehr als 80 % und insbesondere bevorzugt mehr als 90 %.

Zur Vermeidung von Schädigungen des polymeren Werkstoffs bei der Belichtung sollte die Taktfrequenz des Lasers, insbesondere eingestellt durch die Steuereinheit mittels Pulsweitenmodulation (PWM), mindestens 5 kHz betragen, bei geringeren Basisfrequenzen nimmt die Lösungsviskosität der erstellten Bauteile zusätzlich ab. Besonders bevorzugt beträgt die Taktfrequenz mehr als 10 kHz, ganz besonders bevorzugt mehr als 20 kHz.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Insbesondere bevorzugt umfasst das Polymerpulver mindestens ein Polyamid, insbesondere Polyamid 12.

Im Betrieb werden zunächst in der Regel in einem Rechner aufgrund eines Konstruktionsprogrammes oder dergleichen Daten über die Form des herzustellenden Objekts (5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Beispielsweise mittels einer Aufbringvorrichtung (7) wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 100 °C bis 360 °C, vorzugsweise 120 °C bis 200 °C, insbesondere bevorzugt 140 °C bis 160 °C, erwärmt. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) in den damit entstehenden abgesenkten Bereich innerhalb des Ausschnittes eine zweite Materialschicht eingebracht, ggf. wiederum von der Heizung erwärmt.

In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt. Dieser Teil der Steuerung stellt damit eine Einrichtung zum Erzeugen einer das zu bildende Objekt (5) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

Mit der Vorrichtung lassen sich beliebige Formkörper auf einfache Weise herstellen. Somit sind Formkörper hergestellt mit einer erfindungsgemäßen Vorrichtung beziehungsweise mit einem erfindungsgemäßen Verfahren, ebenfalls Gegenstand der vorliegenden Erfindung. Insbesondere bevorzugt weisen die erfindungsgemäß hergestellten Formkörper eine Lösungsviskosität gem. ISO 307 (Schott AVS Pro, Lösemittel m-Kresol sauer, Volumetrisches Verfahren, Doppelbestimmung, Lösetemperatur 100°C, Lösezeit 2h, Polymerkonzentration 5g/l, Messtemperatur 25°C) von mindestens 1,58 auf. Vorzugsweise beträgt die Lösungsviskosität gem. ISO 307 der erfindungsgemäß hergestellten Formkörper 1,6.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Beispiele:

Im Rahmen der vorliegenden Erfindung werden die in Tabelle 1 genannten Messmethoden verwendet, wobei diese, sofern technisch möglich, sowohl für die Bestimmung der Eigenschaften der eingesetzten Materialien als der für die erhaltenen Produkte eingesetzt werden.

**Tabelle 1**

| | **Wert** | **Einheit** | **Prüfart/Prüfgerät/Prüfparameter** |
|---|---|---|---|
| Schüttdichte | 0,445 | g/cm³ | DIN 53466 |
| Korngröße d50 | 55 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Brechungsindex und Blaulichtwert mit 1,52 festgelegt. Auswertung über Mie-Theorie |
| d10 Korngröße d10 | 37 | µm | Malvern Mastersizer 2000, Parameter siehe Korngröße d50 |
| Korngröße d90 | 78 | µm | Malvern Mastersizer 2000, Parameter siehe Korngröße d50 |
| <10,48µm | 4,0 | % | Malvern Mastersizer 2000, Parameter siehe Korngröße d50 |
| Rieselfähigkeit | 32 | s | DIN 53492 |
| Lösungsviskosität | 1,6 | - | ISO 307, Schott AVS Pro, Lösemittel *m*-Kresol sauer, Volumetrisches Verfahren, Doppelbestimmung, Lösetemperatur 100°C, Lösezeit 2h, Polymerkonzentration 5g/l Messtemperatur 25°C |
| BET (spez. Oberfläche) | 6,4 | m²/g | ISO 9277, Micromeritics TriStar 3000, Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 187 | °C | DIN 53765 DSC 7 v. Perkin Elmer Heiz-/Kühlrate 20K/min |
| Rekristallisationstemperatur | 138 | °C | DIN 53765 DSC 7 v. Perkin Elmer Heiz-/Kühlrate 20K/min |
| Materialkonditionierung | Material wird vor Verarbeitung 24h bei 23°C und 50% Luftfeuchtigkeit gelagert | | |

Bei allen Beispielen wird ein nicht nachkondensationsfähiges Polyamid 12 Pulver nach DE19747309 mit den in Tabelle 1 aufgeführten Pulverkennwerten und einer Versuchsanordnung entsprechend Fig. 1 verarbeitet. Alle Beispiele werden der folgenden Beschreibung entsprechend bearbeitet. Die Baukammer wird 180 Minuten auf 155 °C vorgeheizt. Danach wird die Temperatur in der Baukammer erhöht, so dass die Temperatur an der Pulveroberfläche 168 °C beträgt. Vor der ersten Belichtung werden 40 Schichten ohne Belichtung aufgetragen. Das Bauteil wird zentral im Baufeld positioniert. Aus einem Laser (1) wird der Laserstrahl (2) mittels eines Scansystems (3) auf die temperierte (168 °C) und inertisierte (Argon) Pulveroberfläche (4) gelenkt.

Das zu belichtende Bauteil wird zentral im Baufeld positioniert. Eine quadratische Fläche mit einer Kantenlänge von 50 mm wird mittels des Lasers aufgeschmolzen. Danach wird die Bauplattform (6) um 0,15 mm abgesenkt und mittels eines Beschichters (7) eine neue Pulverschicht mit einer Geschwindigkeit von 100 mm/s aufgetragen. Diese Schritte werden wiederholt bis ein 6 mm hohes dreidimensionales Bauteil (5) entsteht. Nach Abschluss der Belichtung werden noch 40 weitere Schichten aufgetragen, bevor die Heizelemente der Vorrichtung ausgeschaltet und die Abkühlphase eingeleitet wird. Die Zeit, die jeweils für eine Schicht benötigte wird, liegt während des gesamten Bauprozesses unter 40 s.

Nach einer Abkühlzeit von mindestens 12 Stunden wird das Bauteil entnommen und vom anhaftenden Pulver befreit. Aus dem Kern in der Mitte des Bauteils wird eine Probe für weitere Untersuchungen entnommen. An dieser Probe wird die Lösungsviskosität nach ISO 307 (Prüfgerät Schott AVS Pro, Lösemittel *m*-Kresol sauer, Volumetrisches Verfahren, Doppelbestimmung, Lösetemperatur 100°C, Lösezeit 2 h, Polymerkonzentration 5 g/l) ermittelt. Die so ermittelte Viskositätszahl ergibt ein Maß für die Molekülmasse des Polymers.

Die Versuchsanordnung wird so gestaltet, dass der Fokusdurchmesser auf der Höhe der Pulveroberfläche 0,3 mm beträgt. Der Fokus des Laserstrahls wird in der Mitte des Baufeldes mit dem FocusMonitor von der PRIMES GmbH in Anlehnung an die ISO 11146 (Methode 2. Moment) vermessen. Die Laserleistung wird in Anlehnung an die ISO 11554 mit dem LM-1000 von der Coherent Deutschland GmbH gemessen, wobei die durchschnittliche Leistung angegeben wird. Die Messungen werden in einem Labor bei 23°C/50% Luftfeuchtigkeit durchgeführt. Die Leistungssteuerung des Lasers in den Beispielen erfolgt mittels eines Steuergeräts welches mit der PWM arbeitet, was zu einem pulsförmigen Leistungsausstoß des Lasers führt.

### Beispiel 1 (nicht erfindungsgemäß)

Als Laser (CO₂, Wellenlänge 10,6 µm) dient der Synrad Firestar t100W. Die Leistung des Lasers wird mit dem UC-2000 von Synrad gesteuert. Als Netzteil kommt das DC-100 DC von Synrad zu Einsatz. Eingesetzt wird der Scanner Scanlab powerSCAN 50 mit varioSCAN 60. Als Pulsbreitenmodulation (PWM) Taktfrequenz wird 5 kHz mit einem Tastgrad von 20 % gewählt. Der Energieeintrag des Lasers beträgt 60 mJ/mm² (Laserleistung 21,2 W, Scangeschwindigkeit 1178 mm/s, Abstand Belichtungslinien 0,3 mm). An der Bauteilprobe wird eine Lösungsviskosität nach ISO 307 von 1,52 ermittelt.

### Beispiel 2 (nicht erfindungsgemäß)

Als Laser (CO₂, Wellenlänge 10,6µm) dient der ULR-50 von Universal Laser Systems Inc. Die Leistung des Lasers wird mit einem Laser-Multi Controller LCT 3001 von MCA Micro Controller Applications gesteuert. Das Netzteil ist das Synrad DC-5. Eingesetzt wird der Scanner Scanlab powerSCAN 50 mit varioSCAN 60. Die Pulsbreitenmodulation (PWM) Taktfrequenz beträgt 5 kHz und der Tastgrad 40 %. Der Energieeintrag des Lasers beträgt 60 mJ/mm² (Laserleistung 20,6 W, Scangeschwindigkeit Laserstrahl 1144 mm/s, Abstand Belichtungslinien 0,3 mm). An der Bauteilprobe wird eine Lösungsviskosität nach ISO 307 von 1,55 ermittelt.

### Beispiel 3 (nicht erfindungsgemäß)

Als Laser (CO₂, Wellenlänge 10,6 µm) dient der ULR-50 von Universal Laser Systems Inc. Die Leistung des Lasers wird mit einem Laser-Multi Controller LCT 3001 von MCA Micro Controller Applications gesteuert. Das Netzteil ist ein Synrad DC-5. Eingesetzt wird der Scanner Scanlab powerSCAN 50 mit varioSCAN 60. Die Pulsbreitenmodulation (PWM) Taktfrequenz beträgt 1 kHz und der Tastgrad 40 %. Der Energieeintrag des Lasers beträgt 60 mJ/mm² (Laserleistung 20,6 W, Scangeschwindigkeit 1144 mm/s, Abstand Belichtungslinien 0,3 mm). An der Bauteilprobe wird eine Lösungsviskosität nach ISO 307 von 1,52 ermittelt.

### Beispiel 4 (nicht erfindungsgemäß)

Eingesetzt wird hier der OTF150-30-0.2 Diodenlaser (Wellenlänge 980 nm) von Optotools. Die Steuerung der Leistung des Lasers erfolgt mit einem Laser-Multi Controller LCT 3001 von MCA Micro Controller Applications. Eingesetzt wird ein DL 1600 Netzteil von Heim Electronic und der Raylase SS-20 Scanner. Die Pulsbreitenmodulation (PWM) Taktfrequenz beträgt 5 kHz und der Tastgrad 40 %. Zur besseren Absorption der Laserenergie wird dem PA 12 Pulver 0,1 % Printex alpha zugemischt. Der Energieeintrag des Lasers beträgt 60 mJ/mm² (Laserleistung 52,6 W, Scangeschwindigkeit 2922 mm/s, Abstand Belichtungslinien 0,3 mm). An der Bauteilprobe wird eine Lösungsviskosität nach ISO 307 von 1,54 ermittelt.

### Beispiel 5 (nicht erfindungsgemäß)

Eingesetzt wird hier der IPG-ELR-100-1550 Faserlaser (Wellenlänge 1550). Die Leistungssteuerung des Lasers erfolgt mit dem Laser-Multi Controller LCT 3001 von MCA Micro Controller Applications. Eingesetzt werden zudem ein DL 1600 Netzteil von Heim Electronic und der Raylase SS-10 Scanner. Die Pulsbreitenmodulation (PWM) Taktfrequenz beträgt 5 kHz und der Tastgrad 40 %. Zur besseren Absorption der Laserenergie wird dem PA 12 Pulver 0,1 % Printex alpha zugemischt. Der Energieeintrag des Lasers beträgt 60 mJ/mm² (Laserleistung 42,1 W, Scangeschwindigkeit 2338 mm/s, Abstand Belichtungslinien 0,3 mm). An der Bauteilprobe wird eine Lösungsviskosität nach ISO 307 von 1,55 ermittelt.

### Beispiel 6 (erfindungsgemäß)

Als Laser (CO₂, Wellenlänge 10,6 µm) dient der ULR-50 von Universal Laser Systems Inc. Die Leistungssteuerung des Lasers erfolgt mit dem Laser-Multi Controller LCT 3001 von MCA Micro Controller Applications. Zum Einsatz kommt ein Synrad DC-5 Netzteil. Eingesetzt wird der Scanner Scanlab powerSCAN 50 mit varioSCAN 60. Die Pulsbreitenmodulation (PWM) Taktfrequenz beträgt 5 kHz und der Tastgrad 60 %. Der Energieeintrag des Lasers beträgt 60 mJ/mm² (Laserleistung 29,2 W, Scangeschwindigkeit 1622 mm/s, Abstand Belichtungslinien 0,3 mm). An der Bauteilprobe wird eine Lösungsviskosität nach ISO 307 von 1,58 ermittelt.

### Beispiel 7 (erfindungsgemäß)

Als Laser (CO₂, Wellenlänge 10,6 µm) dient der ULR-50 von Universal Laser Systems Inc. Die Leistungssteuerung des Lasers erfolgt mit dem Laser-Multi Controller LCT 3001 von MCA Micro Controller Applications. Zum Einsatz kommt ein Synrad DC-5 Netzteil. Eingesetzt wird der Scanner Scanlab powerSCAN 50 mit varioSCAN 60. Die Pulsbreitenmodulation (PWM) Taktfrequenz beträgt 10 kHz und der Tastgrad 60 %. Der Energieeintrag des Lasers beträgt 60 mJ/mm² (Laserleistung 29,2 W, Scangeschwindigkeit 1622 mm/s, Abstand Belichtungslinien 0,3 mm). An der Bauteilprobe wird eine Lösungsviskosität nach ISO 307 von 1,6 ermittelt.

### Beispiel 8 (erfindungsgemäß)

Als Laser (CO₂, Wellenlänge 10,6 µm) dient der ULR-50 von Universal Laser Systems Inc. Die Leistungssteuerung des Lasers erfolgt mit dem Laser-Multi Controller LCT 3001 von MCA Micro Controller Applications. Zum Einsatz kommt ein Synrad DC-5 Netzteil. Eingesetzt wird der Scanner Scanlab powerSCAN 50 mit varioSCAN 60. Die Pulsbreitenmodulation (PWM) Taktfrequenz beträgt 20 kHz und der Tastgrad 60 %. Der Energieeintrag des Lasers beträgt 60 mJ/mm² (Laserleistung 29,2 W, Scangeschwindigkeit 1622 mm/s, Abstand Belichtungslinien 0,3 mm). An der Bauteilprobe wird eine Lösungsviskosität nach ISO 307 von 1,6 ermittelt.

### Beispiel 9 (erfindungsgemäß)

Als Laser (CO₂, Wellenlänge 10,6 µm) dient der Synrad 48-2. Die Leistungssteuerung des Lasers erfolgt mit dem UC-2000 Regler von Synrad. Zum Einsatz kommt ein DC2 Netzteil von Synrad. Eingesetzt wird der Scanner Scanlab powerSCAN 50 mit varioSCAN 60. Die Pulsbreitenmodulation (PWM) Taktfrequenz beträgt 5 kHz und der Tastgrad 80 %. Der Energieeintrag des Lasers beträgt 60 mJ/mm² (Laserleistung 18,9 W, Scangeschwindigkeit 1050 mm/s, Abstand Belichtungslinien 0,3 mm). An der Bauteilprobe wird eine Lösungsviskosität nach ISO 307 von 1,6 ermittelt.

### Beispiel 10 (erfindungsgemäß)

Als Laser (CO₂, Wellenlänge 10,6 µm) dient der Synrad 48-2. Die Leistungssteuerung des Lasers erfolgt mit dem UC-2000 Regler von Synrad. Zum Einsatz kommt ein DC2 Netzteil von Synrad. Eingesetzt wird der Scanner Scanlab powerSCAN 50 mit varioSCAN 60. Die Pulsbreitenmodulation (PWM) Taktfrequenz beträgt 5 kHz und der Tastgrad 90 %. Der Energieeintrag des Lasers beträgt 60 mJ/mm² (Laserleistung 19,8 W, Scangeschwindigkeit 1110 mm/s, Abstand Belichtungslinien 0,3 mm). An der Bauteilprobe wird eine Lösungsviskosität nach ISO 307 von 1,6 ermittelt.

### Beispiel 11 (erfindungsgemäß)

Eingesetzt wird hier der IPG-ELR-100-1550 Faserlaser (Wellenlänge 1550 nm) mit einem Raylase SS-1 0 Scanner und einem Laser-Multi Controller LCT 3001 von MCA Micro Controller Applications zur Leistungssteuerung des Lasers und einem DL 1600 Netzteil von Heim Electronic. Die Pulsbreitenmodulation (PWM) Taktfrequenz beträgt 5 kHz und der Tastgrad 60 %. Zur besseren Absorption der Laserenergie wird dem PA 12 Pulver 0,1 % Printex alpha zugemischt. Der Energieeintrag des Lasers beträgt 60 mJ/mm² (Laserleistung 60,5 W, Scangeschwindigkeit 3360 mm/s, Abstand Belichtungslinien 0,3 mm). An der Bauteilprobe wird eine Lösungsviskosität nach ISO 307 von 1,59 ermittelt.

### Beispiel 12 (erfindungsgemäß)

Eingesetzt wird hier der OTF150-30-0.2 Diodenlaser (Wellenlänge 980nm) von Optotools mit einem Raylase SS-20 Scanner und mit einem Laser-Multi Controller LCT 3001 von MCA Micro Controller Applications zur Leistungssteuerung des Lasers und einem DL 1600 Netzteil von Heim Electronic. Die Pulsbreitenmodulation (PWM) Taktfrequenz beträgt 5 kHz und der Tastgrad 60 %. Zur besseren Absorption der Laserenergie wird dem PA 12 Pulver 0,1 % Printex alpha zugemischt. Der Energieeintrag des Lasers beträgt 60 mJ/mm² (Laserleistung 77,9 W, Scangeschwindigkeit 4328 mm/s, Abstand Belichtungslinien 0,3 mm). An der Bauteilprobe wird eine Lösungsviskosität nach ISO 307 von 1,59 ermittelt.

In Tabelle 2 sind die Ergebnisse nochmals zusammengefasst. Die Lösungsviskosität der erkalteten Schmelze der nicht erfindungsgemäßen Beispiele nimmt bei Tastgraden von unter 60% deutlich ab. Eine verringerte Lösungsviskosität bedeutet einen Molekulargewichtsabbau durch lokale Temperaturspitzen. Ein Molekulargewichtsabbau kann sich wiederum deutlich negativ auf die Eigenschaften von Bauteilen auswirken, die mittels Lasersintern hergestellt werden.

Zur Vermeidung von Schädigungen des polymeren Werkstoffs bei der Belichtung sollte zudem die Pulsbreitenmodulation (PWM) Taktfrequenz mindestens 5 kHz betragen. Bei geringeren Basisfrequenzen nimmt die Lösungsviskosität der erstellten Bauteile zusätzlich ab, wie in dem Vergleich der nicht erfindungsgemäßen Beispiele 2 und 3 zu erkennen ist.

**Tabelle 2**

| | Tastgrad [%] | Taktfrequenz[kHz] | Lösungsviskosität |
|---|---|---|---|
| Beispiel 1 | 20 | 5 | 1,52 |
| Beispiel 2 | 40 | 5 | 1,55 |
| Beispiel 3 | 40 | 1 | 1,52 |
| Beispiel 4 | 40 | 5 | 1,54 |
| Beispiel 5 | 40 | 5 | 1,55 |
| Beispiel 6 | 60 | 5 | 1,58 |
| Beispiel 7 | 60 | 10 | 1,6 |
| Beispiel 8 | 60 | 20 | 1,6 |
| Beispiel 9 | 80 | 5 | 1,6 |
| Beispiel 10 | 90 | 5 | 1,6 |
| Beispiel 11 | 60 | 5 | 1,59 |
| Beispiel 12 | 60 | 5 | 1,59 |

## Patentansprüche

1. Verwendung einer Vorrichtung zur schichtweisen Herstellung von dreidimensionalen Objekten (5) aus Polymerpulvern, mindestens umfassend einen Laser (1) und eine Steuereinheit (3), die den Laser (1) auf einen Tastgrad von mehr als 60% einstellt, **dadurch gekennzeichnet, dass** der Laser (1) mittels Pulsweitenmodulation geregelt wird, wobei die Taktfrequenz mindestens 5 kHz beträgt.

2. Verwendung einer Vorrichtung gemäß Anspruch 1, **dadurch gekennzeichnet, dass** die Taktfrequenz mindestens 10 kHz beträgt.

3. Verwendung einer Vorrichtung gemäß Anspruch 1, **dadurch gekennzeichnet, dass** die Taktfrequenz mindestens 20 kHz beträgt.

4. Verfahren zur schichtweisen Herstellung von dreidimensionalen Objekten (5) aus Polymerpulvern, wobei das selektive Aufschmelzen bzw. Sintern das Polymerpulvers durch einen Laser (1) mit einem Tastgrad von mehr als 60 % erfolgt, **dadurch gekennzeichnet, dass** das selektive Aufschmelzen bzw. Sintern des Polymerpulvers mittels eines Lasers (1) mit einer Taktfrequenz von mindestens 5 kHz erfolgt.

5. Verfahren gemäß Anspruch 4, **dadurch gekennzeichnet, dass** das selektive Aufschmelzen bzw. Sintern das Polymerpulvers durch einen Laser (1) mit einem Tastgrad von mehr als 80 % erfolgt.

6. Verfahren gemäß Anspruch 4 oder 5, **dadurch gekennzeichnet, dass** das selektive Aufschmelzen bzw. Sintern das Polymerpulvers durch einen Laser (1) mit einem Tastgrad von mehr als 90 % erfolgt.

7. Verfahren gemäß einem der Ansprüche 4 bis 6, **dadurch gekennzeichnet, dass** das selektive Aufschmelzen bzw. Sintern des Polymerpulvers mittels eines Lasers (1) mit einer Taktfrequenz von mindestens 10 kHz erfolgt.

8. Verfahren gemäß einem der Ansprüche 4 bis 6, **dadurch gekennzeichnet, dass** das selektive Aufschmelzen bzw. Sintern des Polymerpulvers mittels eines Lasers (1) mit einer Taktfrequenz von mindestens 20 kHz erfolgt.

9. Verwendung mindestens eines Polyamids zur schichtweisen Herstellung von dreidimensionalen Objekten (5) zur Verarbeitung auf einer Vorrichtung,mindestens umfassend einen Laser (1) und eine Steuereinheit (3), die den Laser (1) auf einen Tastgrad von mehr als 60% einstellt, **dadurch gekennzeichnet, dass** der Laser (1) mittels Pulsweitenmodulation geregelt wird, wobei die Taktfrequenz mindestens 5 kHz beträgt.

10. Verwendung nach Anspruch 9, **dadurch gekennzeichnet, dass** die Taktfrequenz mindestens 10 kHz beträgt.

11. Verwendung nach Anspruch 9, **dadurch gekennzeichnet, dass** die Taktfrequenz mindestens 20 kHz beträgt.

## Claims

1. Use of an apparatus for the layer-by-layer production of three-dimensional objects (5) from polymer powders, at least comprising a laser (1) and a control unit (3) which adjusts the laser (1) to a duty factor of more than 60%, **characterized in that** the laser (1) is controlled by means of pulse width modulation, where the switching frequency is at least 5 kHz.

2. Use of an apparatus according to Claim 1, **characterized in that** the switching frequency is at least 10 kHz.

3. Use of an apparatus according to Claim 1, **characterized in that** the switching frequency is at least 20 kHz.

4. Process for the layer-by-layer production of three-dimensional objects (5) from polymer powders, where the selective melting and, respectively, sintering of the polymer powder is achieved by a laser (1) with a duty factor of more than 60%, **characterized in that** the selective melting and, respectively, sintering of the polymer powder is achieved by means of a laser (1) with a switching frequency of at least 5 kHz.

5. Process according to Claim 4, **characterized in that** the selective melting and, respectively, sintering of the polymer powder is achieved by a laser (1) with a duty factor of more than 80%.

6. Process according to Claim 4 or 5, **characterized in that** the selective melting and, respectively, sintering of the polymer powder is achieved by a laser (1) with a duty factor of more than 90%.

7. Process according to any of Claims 4 to 6, **characterized in that** the selective melting and, respectively, sintering of the polymer powder is achieved by means of a laser (1) with a switching frequency of at least 10 kHz.

8. Process according to any of Claims 4 to 6, **characterized in that** the selective melting and, respectively, sintering of the polymer powder is achieved by means of a laser (1) with a switching frequency of at least 20 kHz.

9. Use of at least one polyamide for the layer-by-layer production of three-dimensional objects (5) for processing of an apparatus, at least comprising a laser (1) and a control unit (3) which adjusts the laser (1) to a duty factor of more than 60%, **characterized in that** the laser (1) is controlled by means of a pulse width modulation, where the switching frequency is at least 5 kHz.

10. Use according to Claim 9, **characterized in that** the switching frequency is at least 10 kHz.

11. Use according to Claim 9, **characterized in that** the switching frequency is at least 20 kHz.

## Revendications

1. Utilisation d'un dispositif de fabrication en couches d'objets en trois dimensions (5) constitués de poudres polymères, comprenant au moins un laser (1) et une unité de commande (3), qui règle le laser (1) sur un cycle opératoire de plus de 60 %, **caractérisée en ce que** le laser (1) est réglé au moyen d'une modulation par largeur d'impulsion, dans laquelle la fréquence de synchronisation s'élève à au moins 5 kHz.

2. Utilisation d'un dispositif selon la revendication 1, **caractérisée en ce que** la fréquence de synchronisation s'élève à au moins 10 kHz.

3. Utilisation d'un dispositif selon la revendication 1, **caractérisée en ce que** la fréquence de synchronisation s'élève à au moins 20 kHz.

4. Procédé de fabrication en couches d'objets en trois dimensions (5) constitués de poudres polymères, dans lequel la fusion sélective, respectivement le frittage sélectif de la poudre polymère par un laser (1) est effectué(e) avec un cycle opératoire de plus de 60 %, **caractérisé en ce que** la fusion sélective, respectivement le frittage sélectif de la poudre polymère est effectué(e) au moyen d'un laser (1) avec une fréquence de synchronisation d'au moins 5 kHz.

5. Procédé selon la revendication 4, **caractérisé en ce que** la fusion sélective, respectivement le frittage sélectif de la poudre polymère est effectué (e) par un laser (1) avec un cycle opératoire de plus de 80 %.

6. Procédé selon la revendication 4 ou 5, **caractérisé en ce que** la fusion sélective, respectivement le frittage sélectif de la poudre polymère est effectué(e) par un laser (1) avec un cycle opératoire de plus de 90 %.

7. Procédé selon une des revendications 4 à 6, **caractérisé en ce que** la fusion sélective, respectivement le frittage sélectif de la poudre polymère est effectué(e) au moyen d'un laser (1) avec une fréquence de synchronisation d'au moins 10 kHz.

8. Procédé selon une des revendications 4 à 6, **caractérisé en ce que** la fusion sélective, respectivement le frittage sélectif de la poudre polymère est effectué(e) au moyen d'un laser (1) avec une fréquence de synchronisation d'au moins 20 kHz.

9. Utilisation d'au moins un polyamide pour la fabrication en couches d'objets en trois dimensions (5) à des fins d'usinage sur un dispositif, comprenant au moins un laser (1) et une unité de commande (3), qui règle le laser (1) sur un cycle opératoire de plus de 60 %, **caractérisée en ce que** le laser (1) est réglé au moyen d'une modulation par largeur d'impulsion, dans laquelle la fréquence de synchronisation s'élève à au moins 5 kHz.

10. Utilisation selon la revendication 9, **caractérisée en ce que** la fréquence de synchronisation s'élève à au moins 10 kHz.

11. Utilisation selon la revendication 9, **caractérisée en ce que** la fréquence de synchronisation s'élève à au moins 20 kHz.
